# FASCICULE DE BREVET EUROPEEN

(11) **EP 4 294 706 B1**
(45) Date de publication et mention de la délivrance du brevet: **26.02.2025**
(21) Numéro de dépôt: 22705423.6
(22) Date de dépôt: 18.01.2022
(51) Int. Cl.: B62D 25/20

(54) **STRUCTURE DE SOUBASSEMENT POUR VÉHICULE AUTOMOBILE COMPRENANT UNE PIÈCE DE RENFORT LATÉRAL**
UNTERGESTELLSTRUKTUR FÜR EIN KRAFTFAHRZEUG MIT EINEM SEITLICHEN VERSTÄRKUNGSTEIL
UNDERFRAME STRUCTURE FOR A MOTOR VEHICLE COMPRISING A LATERAL REINFORCEMENT PART

(30) Priorité: 22.02.2021 FR 2101699
(43) Date de publication de la demande: 27.12.2023
(73) Titulaire: Stellantis Auto SAS, 78300 Poissy (FR)
(72) Inventeur: BESSETTE, Damien, 25150 ECOT (FR); MA, Raymond, 78140 VELIZY VILLACOUBLAY (FR)
(74) Mandataire: BCIP
(86) Numéro de dépôt international: PCT/FR2022/050100
(87) Numéro de publication internationale: WO 2022/175611

(56) Documents cités:
- CN-U- 208 021 558
- JP-A- H10 129 533

## Description

La présente invention revendique la priorité de la demande française 2101699 déposée le 22 Février 2021.

La présente invention concerne le domaine des structures pour véhicule et notamment pour véhicule automobile. L'invention concerne plus particulièrement une structure de soubassement pour un véhicule automobile.

La réalisation d'une structure de soubassement de véhicule, et notamment de véhicule automobile, doit satisfaire de nombreuses prestations notamment des tests de chocs.

Un test mesure, par exemple, la résistance d'un véhicule à un choc latéral de type « choc poteau ». Dans ce test, un véhicule est monté sur une plateforme lancée à 32 km/h avec un angle de choc de 75° par rapport à la direction longitudinale du véhicule. Le véhicule est positionné de façon à ce qu'il percute un poteau au niveau du siège avant conducteur. La déformation de l'habitacle engendrant des risques importants de blessures, notamment au niveau du thorax ou de l'abdomen, le test vise particulièrement à évaluer l'amplitude de cette déformation.

En cas de choc latéral de type « choc poteau », une partie des efforts résultant du choc transite par la structure de soubassement. Une structure de soubassement est généralement composée d'un plancher qui s'étend entre au moins deux longerons longitudinaux disposés de chaque côté du véhicule.

La structure de soubassement peut être divisée entre une unité avant et une unité arrière qui sont assemblées au niveau du plancher. Ainsi, le plancher de la structure de soubassement peut être divisé entre une unité avant et une unité arrière fixée à une planche à talon transversale. Les unités avant et arrière du plancher sont deux pièces de tôle distinctes. La longueur des unités avant et/ou arrière du plancher est prédéterminée en fonction de l'empâtement du véhicule. Cette longueur peut être différente selon les différents modèles de véhicule.

Dans le cadre d'un véhicule électrique ou d'un véhicule hybride électrique, l'intégration des batteries et des équipements spécifiques induit une surcharge d'environ 400 kg par rapport à un véhicule thermique.

Le bac de batterie est généralement monté en-dessous de l'unité avant du plancher, par exemple au niveau de traverses d'assise. Il en résulte une rigidité beaucoup plus importante de la structure de soubassement au niveau de l'unité avant du plancher par rapport à l'unité arrière.

Cette différence de rigidité entre les unités avant et arrière du plancher de la structure de soubassement engendre des contraintes de cisaillements importantes au niveau de l'unité arrière lors d'un choc de type choc poteau, avec un risque élevé d'ouverture du plancher de la structure de soubassement.

Du fait de la diversité des empâtements pour un modèle de véhicule donné, il n'est pas possible de fixer le bac de batterie au niveau de l'unité arrière du plancher de la structure de soubassement.

Il y a donc un besoin pour améliorer le comportement d'une structure de soubassement en cas de chocs poteaux.

On connait des solutions pour augmenter la rigidité d'une structure de soubassement comme par exemple dans le document CN208021558U. Ce dernier décrit une structure de soubassement d'un véhicule automobile comprenant deux longerons séparés par un plancher, et une traverse reliant les deux longerons au niveau des roues arrière du véhicule. Une poutre de renforcement est fixée d'une part à un longeron et d'autre part à la traverse de manière à améliorer la rigidité en torsion de la structure de soubassement du véhicule.

Cette solution n'est pas adaptée à l'absorption des chocs de types poteaux. De plus ce document ne prend pas en compte la problématique d'une structure de soubassement comprenant une unité avant et une unité arrière ayant des rigidités différentes.

L'objet de la présente invention est de répondre à au moins un des problèmes et/ou inconvénients mentionnés plus haut. En particulier, l'invention a pour objectif de proposer une structure de soubassement pour un véhicule comprenant un plancher avec une unité avant et une unité arrière, qui limite les effets des contraintes de cisaillement dues aux différences de rigidité entre les unités avant et arrière du plancher, dans le cadre d'un choc latéral. De préférence, l'invention a pour objectif de proposer une structure de soubassement pour un véhicule comprenant un plancher avec une unité avant et une unité arrière, qui limite les effets des contraintes de cisaillement dues aux différences de rigidité entre les unités avant et arrière du plancher, dans le cadre d'un choc latéral, qui soit peu complexe et qui puisse être adapté à des véhicules ayant des empâtements différents.

A cet effet et selon un premier aspect, l'invention concerne une structure de soubassement pour un véhicule automobile, la structure de soubassement comprenant, un plancher, et au moins deux longerons longitudinaux disposés respectivement à chaque bord longitudinal du plancher; le plancher est divisé en au moins une unité avant; et une unité arrière fixée à une planche à talon transversale.

La structure de soubassement est remarquable en ce qu'elle comprend en outre au moins une pièce de renfort latéral qui comprend au moins un corps allongé s'étendant depuis la planche à talon vers le longeron le plus proche ; la pièce de renfort latéral est fixée d'une part à la planche à talon, et d'autre part à l'unité avant du plancher ou à un longeron au niveau de l'unité avant du plancher.

La pièce de renfort latéral permet en cas de choc latéral de transmettre les efforts depuis le longeron vers la planche à talon. Dans le cas où les unités avant et arrière du plancher, cela permet de réduire les efforts qui sont transmis au plancher et par conséquent de limiter les risques d'ouverture du plancher en cas de choc latéral, par exemple de type choc poteau. De plus la fixation de la pièce de renfort latéral étant faite d'une part à la planche à talon et d'autre part au plancher ou au longeron, la pièce de renfort latéral peut être adaptée pour une grande diversité d'empâtements selon les variantes d'un modèle de véhicule.

De préférence, la pièce de renfort latéral comprend une zone rigide fixée à la planche à talon et une zone déformable en compression ; la zone déformable en compression comprenant des moyens favorisant sa déformation. De préférence, les moyens favorisant la déformation en compression de la zone déformable comprennent au moins un des éléments suivants : une nuance de matériau différente par rapport à la zone rigide, une épaisseur de tôle différente par rapport à la zone rigide, une ou plusieurs encoches, lumières, ondulations, nervures, ou rebord, ou une combinaison de ceux-ci.

La déformation de la zone déformable en compression permet de dissiper une partie des efforts générés par un choc, offrant une protection pour les passagers. La zone rigide constitue une zone de passage d'effort vers la planche à talon.

Dans des modes de réalisation, l'unité avant comprenant une traverse d'assise arrière avec une zone déformable en compression en cas de choc connectée au longeron et une zone rigide, la structure de soubassement est remarquable en ce que la zone déformable de la pièce de renfort latéral s'étend transversalement depuis le longeron sur une longueur inférieure à la longueur de la zone déformable de la traverse d'assise arrière. Comme la majorité des efforts exercés dans la direction transversale du véhicule sont transmis à la traverse, cette configuration de la zone déformable de la pièce de renfort permet une bonne transmission des efforts vers la planche à talon.

De préférence, la pièce de renfort latéral est une pièce comprenant un corps formant un angle avec les longerons, s'étendant depuis la planche à talon vers le longeron le plus proche, et comprenant en outre au moins une branche s'étendant depuis le corps. De préférence, au moins une branche s'étend au niveau de l'unité arrière du plancher. La présence de branches dans la pièce de renfort latéral permet de mieux répartir les efforts transmis par cette dernière par rapport à une pièce comprenant un corps simple.

Avantageusement, le corps et la branche de la pièce de renfort latéral sont fixés à la planche à talon, de manière à avoir une répartition plus homogène des efforts.

Dans des modes de réalisation, la pièce de renfort latéral étant une pièce de tôle plate, la structure de soubassement est remarquable en ce que la zone rigide de la pièce de renfort latéral est une zone surélevée par rapport à la zone déformable entourée par un rebord de rigidification. Ces modes de réalisation permettent d'obtenir une pièce de renfort latéral qui prend peu d'espace, notamment dans la direction verticale. La pièce de renfort latéral peut être aisément cachée sous le revêtement de plancher sans gêner l'aspect visuel de celui-ci.

Dans des modes de réalisation, la pièce de renfort latéral est un profilé en U avec des pattes de fixation. Les pattes de fixation peuvent être orientées vers l'intérieur ou vers l'extérieur. Les profilés sont des pièces simples qui peuvent être assemblées par soudage au niveau du poste de ferrage, sans requérir un poste de montage supplémentaire.

De préférence, le corps de la pièce de renfort latéral, forme un angle d'au moins 30° avec le longeron ; de préférence d'au moins 45°. Ces orientations ont donné les meilleurs résultats de transmission des efforts dans le cadre d'un choc latéral de type choc poteau.

De préférence, la pièce de renfort latéral s'élève verticalement sur une distance d'au plus 6 mm ; de préférence d'au plus 8 mm ; de préférence d'au plus 10 mm. La limitation verticale de la pièce de renfort latéral facilite l'installation d'un revêtement de plancher au-dessus du plancher sans modifier son aspect visuel et sans gêner le placement des pieds de l'utilisateur.

Selon un deuxième aspect, l'invention concerne un véhicule automobile comprenant une structure de soubassement selon le premier aspect. De préférence le véhicule comprend un bac de batterie de propulsion agencé au niveau de l'unité avant du plancher de la structure de soubassement.

D'autres particularités et caractéristiques de l'invention ressortiront de la description détaillée d'au moins un mode de réalisation avantageux présenté ci-dessous, à titre d'illustration, en se référant aux figures annexées. Celles-ci montrent :
[Fig. 1] la figure 1 est une vue du dessous d'un détail d'une structure de soubassement selon un mode de réalisation de l'invention ;
[Fig. 2] la figure 2 est une vue en perspective du dessus, d'un détail d'une structure de soubassement selon un mode de réalisation de l'invention ;
[Fig. 3] la figure 3 est une vue en perspective du dessus, d'un détail d'une structure de soubassement selon un autre mode de réalisation de l'invention.

Dans la suite de la description, le terme « comprendre » est synonyme de « inclure » et n'est pas limitatif en ce qu'il autorise la présence d'autres éléments dans la structure de soubassement, ou le véhicule auquel il fait référence. Il est entendu que le terme « comprendre » inclut les termes « consister en ».

De même, les termes « inférieur », « supérieur », « haut » et « bas » s'entendront selon leur définition usuelle, dans laquelle les termes « inférieur » et « bas » indiquent une proximité avec le sol plus importante selon la direction verticale que respectivement les termes « supérieur » et « haut ».

Les termes « longitudinal », « transversal », « avant » et « arrière » s'entendront par rapport à l'orientation générale du véhicule tel que pris selon son sens normal de marche.

Par « profilé » on entendra un élément de forme allongé montrant un profil particulier selon sa section transversale. Les profilés peuvent être obtenus par pliage, emboutissage ou profilage d'une tôle ou de plusieurs tôles préalablement assemblées entre elles.

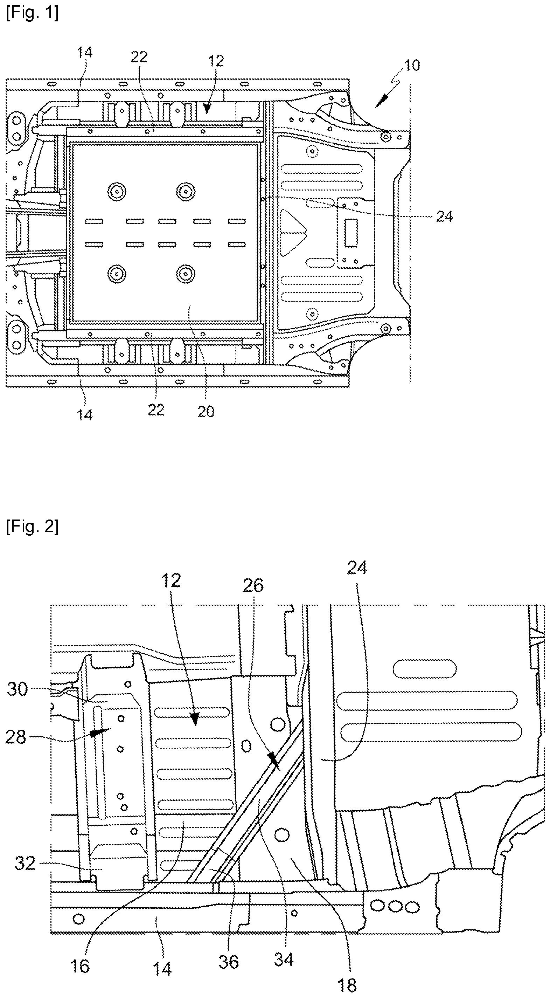

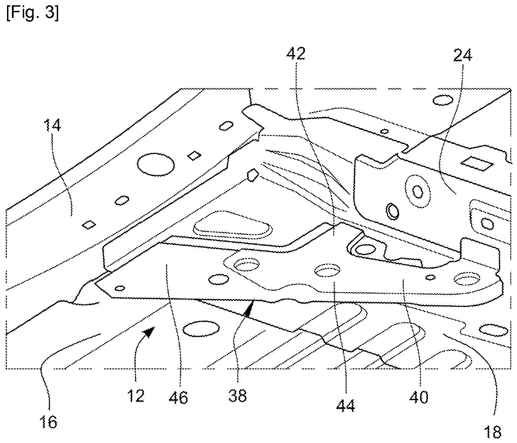

Comme montré à la figure 1, une structure de soubassement 10 d'un véhicule de type électrique ou hybride électrique comprend, un plancher 12, et au moins deux longerons 14 longitudinaux disposés respectivement à chaque bord longitudinal du plancher. La structure de soubassement peut être divisée entre une unité avant et une unité arrière qui sont assemblées au niveau du plancher. Ainsi, le plancher est divisé en au moins deux unités, avec une unité avant 16 et une unité arrière 18, montrées aux figures 2 et 3. Les unités avant et arrière du plancher peuvent être formées par des pièces de tôle distinctes fixées ensemble de préférence par soudage. L'unité avant et/ou l'unité arrière du plancher peut avoir des dimensions différentes dans la direction longitudinale du véhicule en fonction de l'empâtement de ce dernier.

La figure 1 est une vue de dessous de la structure de soubassement 10, montrant les éléments montés en-dessous du plancher 12.

Un bac de batterie de propulsion 20 est fixé sous l'unité avant 16 du plancher par des moyens de fixation comme, par exemple, des systèmes vis-écrous. Le bac de batterie de propulsion 20 peut être associé à des moyens de support qui peuvent également lui assurer une protection en cas de choc latéral. Par exemple, comme montré à la figure 1, la structure de soubassement comprend des brancards 22 sous plancher longitudinaux qui sont connectés aux longerons par des pièces de protection contre les chocs latéraux, et le bac de batterie de propulsion 20 aux brancards 22.

L'unité arrière est fixée à une planche à talon 24 transversale, verticale qui sépare le plancher de l'habitacle du coffre du véhicule.

Comme montré, par exemple, à la figure 2, la structure de soubassement comprend en outre au moins une pièce de renfort latéral 26 qui comprend au moins un corps allongé s'étendant depuis la planche à talon vers le longeron le plus proche. La pièce de renfort latéral 26 est fixée d'une part à la planche à talon 24, et d'autre part à l'unité avant 16 du plancher 12 ou à un longeron 14 au niveau de l'unité avant 16 du plancher.

La structure de soubassement peut comprendre une pluralité de pièces de renfort latéral. De préférence, la structure de soubassement comprend au moins deux pièces de renfort latéral disposées de manière symétrique de chaque côté de la structure de soubassement. Par simplification, on décrira une seule pièce de renfort latéral.

La pièce de renfort latéral est une pièce de préférence en acier, de préférence d'une épaisseur inférieure à 2 mm. Elle peut être présentée sous la forme d'une plaque emboutie, d'un profilé, ou autre.

Au niveau de l'unité arrière, la pièce de renfort latéral est fixée à la paroi verticale de la planche à talon 24. Au niveau de l'unité avant, la pièce de renfort latéral peut être fixée à une paroi verticale du longeron ou au plancher. Lorsque la pièce de renfort latéral est fixée au plancher, sa fixation peut être verticalement alignée avec les fixations d'un brancard 22 du bac de batterie de propulsion 20.

La fixation de la pièce de renfort latéral au niveau de l'unité avant ou de l'unité arrière peut se faire par tous moyens. De préférence, la pièce de renfort latéral est soudée dans l'unité avant et/ou dans l'unité arrière de manière à ne pas comprendre de protubérances susceptibles de gêner l'installation d'un revêtement de plancher.

En effectuant une fixation par soudage, la pièce de renfort latéral peut être montée avec la structure de soubassement dans un poste de ferrage déjà existant d'une ligne de montage. Il n'est pas nécessaire d'ajouter un poste pour le montage d'une pièce vissée.

La pièce de renfort latéral est disposée de manière à transmettre les efforts générés lors d'un choc latéral de type choc poteau, depuis un des longerons 14 vers la planche à talon 24.

Au niveau de l'unité avant 16 du plancher, la structure de soubassement 10 comprend une traverse d'assise arrière 28, montrée à la figure 2, qui peut servir de support pour des rails de siège avant non montrés. De manière à amortir les efforts en cas de choc poteau, la traverse d'assise arrière peut comprendre une zone déformable 32 en compression en cas de choc, fixée au longeron, et une zone rigide 30 qui peut, par exemple, s'étendre transversalement sur au moins la largeur du bac de batterie de propulsion, ou jusqu'à un tunnel central.

Comme montré, par exemple, à la figure 2, la pièce de renfort latéral 26 peut comprendre une zone rigide 34, fixée à la planche à talon 24 et une zone déformable 36 en compression en cas de choc. La zone déformable 36 est agencée au niveau de l'unité avant du plancher et comprend de préférence des moyens favorisant sa déformation.

De manière à conserver une bonne absorption des chocs latéraux, la zone déformable 36 s'étend transversalement depuis le longeron 14 sur une longueur inférieure à la longueur de la zone déformable 32 de la traverse d'assise arrière 28, i.e. la longueur maximale de la zone déformable 36 de la pièce de renfort latéral 26 selon l'axe Y du véhicule, depuis le longeron, n'excède pas celle de la zone déformable 32 de la traverse arrière selon ce même axe Y.

Les moyens favorisant la déformation en compression de la zone déformable de la pièce de renfort latéral comprennent au moins un des éléments suivants : une nuance de matériau différente par rapport à la zone rigide, une épaisseur de tôle différente par rapport à la zone rigide, une ou plusieurs encoches, lumières, ondulations, nervures, ou rebord, ou une combinaison de ceux-ci.

Les zones rigide et déformable de la pièce de renfort latéral peuvent être formées par deux éléments distincts assemblés par raboutage ou par d'autres moyens.

Le corps de la pièce de renfort latéral est disposé de manière à former un angle avec un longeron 14. Autrement dit, le corps de la pièce de renfort latéral n'est ni parallèle, ni perpendiculaire au longeron. Pour améliorer la transmission des efforts en cas de chocs latéral, l'orientation du corps de la pièce de renfort correspond à l'orientation du choc réalisé lors d'un choc poteau comme présenté ci-avant. Le corps de la pièce de renfort latéral forme de préférence un angle d'au moins 30° avec le longeron ; de préférence d'au moins 45°.

La hauteur de la pièce de renfort latéral est déterminée de manière à ne pas trop surélever la hauteur d'un revêtement de plancher sur lequel repose les pieds d'un passager du véhicule. Quelle que soit la configuration de la pièce de renfort latéral, on préférera que sa hauteur, selon l'axe Z du véhicule soit d'au plus 10 mm ; de préférence, d'au plus 8 mm ; de préférence d'au plus 6 mm.

Dans le mode de réalisation montré à la figure 2, la pièce de renfort latéral 26 est un profilé en Ω, i.e. un profilé en U avec des pattes de fixations orientées vers l'extérieur du profilé. Selon les variantes, la pièce de renfort latéral peut aussi être un profilé en U avec des pattes de fixation orientées vers l'intérieur du profilé. La pièce de renfort latéral comprend ici un corps simple sans branches. Selon les variantes, la pièce de renfort latéral peut comprendre en outre une ou plusieurs branches s'étendant depuis le corps. Ici la pièce de renfort latéral 26 comprend une zone rigide 34 et une zone déformable 36 en compression, formées par des profilés raboutés ayant des nuances d'acier différentes.

Dans un autre mode de réalisation montré à la figure 3, la pièce de renfort latéral 38 est une pièce comprenant un corps 40, et comprenant en outre une branche 42. Le corps 40 s'étend depuis la planche à talon 24 jusqu'à l'unité avant 16 du plancher de la structure de soubassement. La branche 42 dédouble le corps au niveau de l'unité arrière 18 du plancher de la structure de soubassement. Selon les variantes, la pièce de renfort latéral peut comprendre plusieurs branches qui sont disposées au niveau de l'unité avant ou au niveau de l'unité arrière du plancher de la structure de soubassement.

Selon les modes de réalisation, la pièce de renfort latéral peut être fixée à la planche à talon par son corps ou par au moins une de ses branches. Par exemple, comme montré à la figure 3, la pièce de renfort latéral 38 est fixée par soudage à la planche à talon 24 au niveau de son corps 40. Le corps 40 de la pièce de renfort latéral 38 est aussi fixé par soudage au niveau de l'unité avant 16 du plancher de la structure de soubassement.

Dans ce mode de réalisation, la pièce de renfort latéral 38 est une pièce de tôle plate dont la hauteur selon l'axe Z est réduite par rapport au mode de réalisation de la figure 2. Par exemple la pièce de renfort latéral 38 est formée en acier avec une épaisseur de 1,5 mm ou moins. Par exemple, l'acier utilisé est un acier de type E275D selon la norme NF A 36-203.

La pièce de renfort latéral 38 comprend une zone rigide 44, et une zone déformable 46. Les zones rigide et déformable peuvent être formées avec la même nuance et la même épaisseur d'acier. La zone rigide 44 de la pièce de renfort latéral 38 est une zone surélevée par rapport à la zone déformable 46 entourée par un rebord de rigidification permettant de rigidifier la pièce de renfort latéral sur tout le pourtour de la zone rigide 44. La zone rigide peut être obtenue par exemple par emboutissage.

## Revendications

1. Structure de soubassement (10) pour un véhicule automobile, la structure de soubassement comprenant, un plancher (12), et au moins deux longerons (14) longitudinaux disposés respectivement à chaque bord longitudinal du plancher (12) ; le plancher (12) est divisé en au moins une unité avant (16) ; et une unité arrière (18) fixé à une planche à talon (24) transversale ; la structure de soubassement est **caractérisée en ce qu'**elle comprend en outre au moins une pièce de renfort latéral (26, 38) qui comprend au moins un corps allongé s'étendant depuis la planche à talon vers le longeron le plus proche ; la pièce de renfort latéral est fixée d'une part à la planche à talon (24), et d'autre part à l'unité avant (16) du plancher (12) ou à un longeron (14) au niveau de l'unité avant (16) du plancher.

2. Structure de soubassement (10) selon la revendication 1, **caractérisée en ce que** la pièce de renfort latéral (26, 38) comprend une zone rigide (34, 44) fixée à la planche à talon (24) et une zone déformable (36, 46) en compression ; la zone déformable en compression comprenant des moyens favorisant sa déformation ; de préférence, les moyens favorisant la déformation en compression de la zone déformable comprennent au moins un des éléments suivants : une nuance de matériau différente par rapport à la zone rigide, une épaisseur de tôle différente par rapport à la zone rigide, une ou plusieurs encoches, lumières, ondulations, nervures, ou rebord ou une combinaison de ceux-ci.

3. Structure de soubassement (10) selon la revendication 2, l'unité avant (16) comprenant une traverse d'assise arrière (28) avec une zone déformable (32) en compression en cas de choc fixée au longeron et une zone rigide (30), la structure de soubassement est **caractérisée en ce que** la zone déformable (36, 46) de la pièce de renfort latéral (26, 38) s'étend transversalement depuis le longeron (14) sur une longueur inférieure à la longueur de la zone déformable de la traverse d'assise arrière.

4. Structure de soubassement (10) selon l'une quelconque des revendications 1 à 3, **caractérisé en ce que** la pièce de renfort latéral (38) est une pièce comprenant un corps (40) formant un angle avec les longerons (14), s'étendant depuis la planche à talon (24) vers le longeron le plus proche, et comprenant en outre au moins une branche (42) ; de préférence au moins une branche (42) s'étend au niveau de l'unité arrière (16) du plancher.

5. Structure de soubassement (10) selon la revendication 4, **caractérisé en ce que** le corps (40) et au moins branche (42) de la pièce de renfort latéral (38) sont fixés à la planche à talon.

6. Structure de soubassement (10) selon l'une quelconque des revendications 1 à 5, la pièce de renfort latéral (38) étant une pièce de tôle plate, la structure de soubassement est **caractérisée en ce que** la zone rigide (44) de la pièce de renfort latéral (38) est une zone surélevée par rapport à la zone déformable (46) entourée par un rebord de rigidification.

7. Structure de soubassement (10) selon l'une quelconque des revendications précédentes, **caractérisé en ce que** la pièce de renfort latéral (26) est un profilé en U avec des pattes de fixation.

8. Structure de soubassement (10) selon l'une quelconque des revendications 1 à 6, **caractérisé en ce que** le corps de la pièce de renfort latéral, forme un angle d'au moins 30° avec le longeron ; de préférence d'au moins 45°.

9. Structure de soubassement (10) selon l'une quelconque des revendications 1 à 7, **caractérisé en ce que** la pièce de renfort latéral (26, 38) s'élève verticalement sur une distance d'au plus 6 mm ; de préférence d'au plus 10 mm.

10. Véhicule automobile comprenant une structure de soubassement (10) selon l'une quelconque des revendications 1 à 9 ; de préférence le véhicule comprend un bac de batterie de propulsion (20) agencé au niveau de l'unité (16) avant du plancher (12) de la structure de soubassement.

## Patentansprüche

1. Unterbaustruktur (10) für ein Kraftfahrzeug, wobei die Unterbaustruktur einen Boden (12) und mindestens zwei Längsträger (14) umfasst, die jeweils an jeder Längskante des Bodens (12) angeordnet sind; Der Boden (12) ist in mindestens eine vordere Einheit (16) unterteilt. und eine hintere Einheit (18), die an einem Querbrett (24) befestigt ist; Die Unterkonstruktion ist **dadurch gekennzeichnet, dass** sie ferner mindestens ein seitliches Verstärkungselement (26, 38) umfasst, das mindestens einen länglichen Körper umfasst, der sich von dem Fersenbrett zum nächsten Längsträger erstreckt. Das seitliche Verstärkungselement ist einerseits am Wulstbrett (24) und andererseits an der Vordereinheit (16) des Bodens (12) oder an einem Längsträger (14) an der Vordereinheit (16) des Bodens befestigt.

2. Untergestell (10) nach Anspruch 1, **dadurch gekennzeichnet, dass** das seitliche Verstärkungsstück (26, 38) einen starren Bereich (34, 44), der an dem Wulstbrett (24) befestigt ist, und einen verformbaren Bereich (36, 46), der unter Druck steht, umfasst; die verformbare Kompressionszone mit Mitteln zur Förderung ihrer Verformung; Vorzugsweise umfassen die Mittel zur Förderung der Verformung des verformbaren Bereichs mindestens eines der folgenden Elemente: eine Materialnuance, die sich von der starren Zone unterscheidet, eine Blechdicke, die sich von der starren Zone unterscheidet, eine oder mehrere Einkerbungen, Öffnungen, Wellen, Rippen oder eine Kombination daraus.

3. Unterbau (10) nach Anspruch 2, wobei die vordere Einheit (16) einen hinteren Sitzträger (28) mit einem verformbaren Bereich (32), der bei einem Aufprall an dem Längsträger befestigt ist, und einem starren Bereich (30) umfasst, wobei der verformbare Bereich (36, 46) des Verstärkungsteils Die seitliche (26, 38) erstreckt sich quer vom Längsträger (14) über eine Länge, die kleiner ist als die Länge des verformbaren Bereichs des hinteren Sitzträgers.

4. Untergestell (10) nach einem der Ansprüche 1 bis 3, **dadurch gekennzeichnet, dass** das seitliche Verstärkungsstück (38) ein Teil ist, das einen Körper (40) umfasst, der einen Winkel zu den Holmen (14) bildet, der sich von dem Fersenbrett (24) zum nächsten Holm erstreckt und ferner mindestens einen Schenkel (4) umfasst 2. Vorzugsweise erstreckt sich mindestens ein Schenkel (42) an der hinteren Bodeneinheit (16).

5. Untergestell (10) nach Anspruch 4, **dadurch gekennzeichnet, dass** der Körper (40) und mindestens ein Schenkel (42) des seitlichen Verstärkungselements (38) an dem Fersenbrett befestigt sind.

6. Untergestell (10) nach einem der Ansprüche 1 bis 5, wobei das seitliche Verstärkungselement (38) ein flaches Blechelement ist, und die Untergestell-Struktur **dadurch gekennzeichnet ist, dass** der starre Bereich (44) des seitlichen Verstärkungselements (38) ein Bereich ist, der gegenüber dem verformbaren Bereich (46), der von einem Versteifungsflansch umgeben ist, angehoben ist.

7. Untergestell (10) nach einem der vorhergehenden Ansprüche, **dadurch gekennzeichnet, dass** das seitliche Verstärkungsstück (26) ein U-Profil mit Befestigungslaschen ist.

8. Unterbau (10) nach einem der Ansprüche 1 bis 6, **dadurch gekennzeichnet, dass** der Körper des seitlichen Verstärkungselements einen Winkel von mindestens 30° mit dem Längsträger bildet; vorzugsweise mindestens 45°.

9. Unterbaustruktur (10) nach einem der Ansprüche 1 bis 7, **dadurch gekennzeichnet, dass** das seitliche Verstärkungsteil (26, 38) vertikal über einen Abstand von höchstens 6 mm aufsteigt; vorzugsweise höchstens 10 mm.

10. Kraftfahrzeug mit einer Unterbaustruktur (10) nach einem der Ansprüche 1 bis 9; Vorzugsweise umfasst das Fahrzeug einen Antriebsbatteriebehälter (20), der an der Einheit (16) vor dem Boden (12) der Unterbaustruktur angeordnet ist.

## Claims

1. Underlying structure (10) for a motor vehicle, the underlying structure comprising, one floor (12), and at least two longitudinal lengths (14) arranged respectively at each longitudinal edge of the floor (12); the floor (12) is divided into at least one front unit (16); and a rear unit (18) attached to a cross-section heel board (24); the base structure is **characterized in that** it also includes at least one side reinforcement piece (26, 38) which includes at least one elongated body extending from the heel board to the nearest longeron; the side reinforcement part is fixed on the heel board (24) and on the front unit (16) of the floor (12) or on a longeron (14) at the front unit (16) of the floor.

2. Underlying structure (10) according to Claim 1, characterized that the side reinforcement part (26, 38) includes a rigid zone (34, 44) attached to the heel board (24) and a deformable zone (36, 46) in compression; the compression deformable zone including means to promote its deformation; preferably, means promoting compression deformation of the deformable zone shall include at least one of the following: a shade of material different from the rigid zone, a thickness of sheet metal different from the rigid zone, one or more notches, lights, ripples, ribs, or edge or a combination thereof.

3. Underlying structure (10) according to Claim 2, the front unit (16) comprising a rear seat cross (28) with a deformable zone (32) in compression in the event of a shock attached to the spar and a rigid zone (30), the underlying structure is **characterized by** the deformable zone (36, 46) of the side reinforcement part (26, 38) extends from the longeron (14) to a length less than the length of the deformable zone of the rear seat cross.

4. Underlying structure (10) according to any of Claims 1 to 3, characterized as the side reinforcement part (38) is a part consisting of a body (40) forming an angle with the longerons (14), extending from the heel board (24) to the nearest longeron, and also comprising at least one branch (4) 2); preferably at least one branch (42) extends to the rear unit (16) of the floor.

5. Underlying structure (10) according to Claim 4, characterized as the body (40) and at least branch (42) of the side reinforcement part (38) are attached to the heel board.

6. Underlying structure (10) according to any of Claims 1 to 5, with the side reinforcement part (38) being a flat sheet part, the underlying structure is **characterized by** the fact that the rigid area (44) of the side reinforcement part (38) is an area raised from the deformable area (46) surrounded by a stiffening rim.

7. Underlying structure (10) according to any of the previous claims, characterized as the side reinforcement part (26) is a U-shaped profile with fastening legs.

8. Underlying structure (10) according to any of Claims 1 to 6, **characterized in that** the body of the side reinforcement part forms an angle of at least 30° with the spar; preferably at least 45°.

9. Underlying structure (10) according to any of Claims 1 to 7, **characterized by** the lateral reinforcement part (26, 38) standing vertically over a distance of not more than 6 mm; preferably not more than 10 mm.

10. Motor vehicle with a base structure (10) according to any of the claims 1 to 9; preferably the vehicle includes a battery pack (20) arranged at the unit level (16) before the floor (12) of the base structure.
